# EUROPEAN PATENT SPECIFICATION

(11) **EP 0 856 219 B1**
(45) Date of publication and mention of the grant of the patent: **29.05.2002**
(21) Application number: 95937492.7
(22) Date of filing: 20.10.1995
(51) Int. Cl.: H04M 1/76, H04M 11/06

(54) **TELEPHONE ISOLATION DEVICE**
TELEFONTRENNUNGSVORRICHTUNG
DISPOSITIF D'ISOLEMENT DU TELEPHONE

(43) Date of publication of application: 05.08.1998
(60) Divisional application: 01126127.8
(73) Proprietor: SILICON LABS ISOLATION, INC., Pleasanton, California 94588 (US)
(72) Inventor: Yurgelites, Gerald, J., Antioch, CA 94509 (US)
(74) Representative: Hackney, Nigel John
(86) International application number: US9513344
(87) International publication number: WO9715135

(56) References cited:
- US-A- 4 757 528
- US-A- 4 835 486
- US-A- 4 843 339
- US-A- 5 245 654
- US-A- 5 329 585

## Description

### Background of the Invention

The present invention relates generally to electronic circuitry and more particularly to isolation circuitry such as used in telephone line interface equipment.

Isolation of end user telephone equipment from the telephone network is required by the U.S. Federal Communications Commission and other counterpart regulatory agencies in other countries. The primary purpose of this regulation is to protect the network from faulty end user devices and from accidental connections to power lines and the like.

The specific regulations for such isolation change from country to country. The U.S. requires 1000 VRMS isolation while other countries may require 3500 to 4000 volt isolation. These regulations are usually dependent on power line mains voltage and internal country safety requirements. Common wisdom among those skilled in the field of Direct Access Arrangements or DAA's has shown other techniques than the application of isolation transformers between the end user equipment and the network. There has been some recent recognition that certain paths can be isolated using other techniques. For example, U.S. Patent No. 4,864,605 to Ramsey et al shows the use of a coupling transformer in the main signal path and optical isolators in the ring detect and off-hook driving circuitry. In a similar way, U.S. Patent No. 4,417,099 to Pierce discloses the use of optoisolators in the digital portion of the data paths of a line-powered modem. Moreover, U.S. Patent No. 4,757,528 to Falater et al discloses an electro-thermal isolator coupler in conjunction with an RF capacitive coupling mechanism. This system claims to provide a DAA device, but requires a substrate having a subscriber portion and a line portion electrically isolated from each other.

Moreover, U.S. Patent No. 5,245,654 to Wilkison et al discloses an optical isolation coupler circuit characterized by wide band width, low noise, and high linearity. This circuit has proven expensive due to the tightly coupled optical devices required to provide the necessary feedback for linearity.

The present invention eliminates the requirement for thermal, resistive, and optical isolation. The thermal and optical isolation requirements are complex and expensive to produce. The use of an integrated circuit to thermally transfer low frequency signals can be supplanted by other means that are more cost effective to produce. The capacitive approach lends itself to a more integrated design using less external components.

### Summary of the Invention

The present invention provides an isolation circuit that is devoid of a coupling transformer, optical isolator elements, and high value resistors, and yet is practical for use as a telephone line interface.

A first aspect of the present invention provides a telephone line isolation circuit according to claim 1.

In a second aspect the present inventions provides a method for transmitting an information signal across an electrical isolation barrier according to claim 23.

In another aspect, the present invention uses a pair of capacitors that differentially couple analog transmit and receive channels in full duplex communication across an isolation barrier. The capacitors are connected across the isolation barrier, and each transmit or receive signal is processed to generate respective paired complementary signals. A switching network on one side of the barrier is clock driven to differentially charge the paired capacitors in incremental fashion with the paired complementary signals. On the opposite side of the barrier, a clock driven switching network receives the differential charges on the paired capacitors, generating paired complementary signals that are processed to form a single analog information signal. Clock signals and off-hook and ringing signals are also transmitted across the barrier in similar fashion.

In another aspect, the invention can be configured to engage two pairs of capacitors that differentially couple analog transmit and receive channels in a user device across an isolation barrier to a telephone line pair for full duplex communication on the line side. The interface circuit, which also includes a hybrid circuit, includes first and second oppositely directed capacitor isolation circuits. The first is disposed between the transmit channel and the hybrid; the second is connected between the receive channel and the hybrid.

More specifically, a transmit capacitor isolation circuit has an input located on the user device side of the isolation barrier and an output on the line side of the barrier and generates analog signals at its output corresponding to analog signals at its input. A receive capacitor isolation circuit has an input located on the line side of the barrier and an output on the user side of the barrier and generates analog signals at its output corresponding to analog signals at its input.

### Brief Description of the Drawing

Figure 1 is a functional block diagram of a telephone interface showing the interconnection of the present invention between a user device and a telephone network.

Figure 2 is a functional block diagram of an embodiment of the telephone interface of the invention featuring independent transmit and receive circuits.

Figure 3 is a functional block diagram of another embodiment of the telephone interface of the invention featuring a combined full duplex transmit and receive circuit.

Figure 4 is a detailed schematic diagram of the transmit circuit on the user side of the telephone interface of the present invention.

Figure 5 is a detailed schematic diagram of the receive circuit and ring signal interpreter circuit on the user side of the telephone interface of the invention.

Figure 6 is a detailed schematic diagram of the switching clock generator, phase control, and off-hook control circuits on the user side of the telephone interface.

Figure 7 is a detailed schematic diagram of the transmit circuit on the line interface of the telephone interface of the invention.

Figure 8 is a detailed schematic diagram of the receive circuit on the line interface of the telephone interface of the invention.

Figure 9 is a detailed schematic diagram of the line interface and voltage generator circuits on the line side of the interface of the invention.

Figure 10 is a detailed schematic diagram of the switching clock circuit on the line side of the interface of the invention.

Figure 11 is a detailed schematic diagram of the ring interface circuit on the line side of the interface of the invention.

Figure 12 is a detailed schematic diagram of the ring detection and line coupler circuits on the line side of the interface of the invention.

Figure 13 is a detailed schematic diagram of the reference voltage generator circuit on the user side of the interface of the invention.

Figures 14a and 14b are simplified schematic diagrams depicting the operation of the differential capacitor charging and detecting circuits of the invention.

Figure 15 is a simplified schematic diagram depicting the common mode noise characteristic of the differential capacitor charging and detecting circuits of the invention.

Figures 16a and 16b are graphic depictions of the common mode noise signal of the circuit depicted in Figure 15.

### Description of the Preferred Embodiment

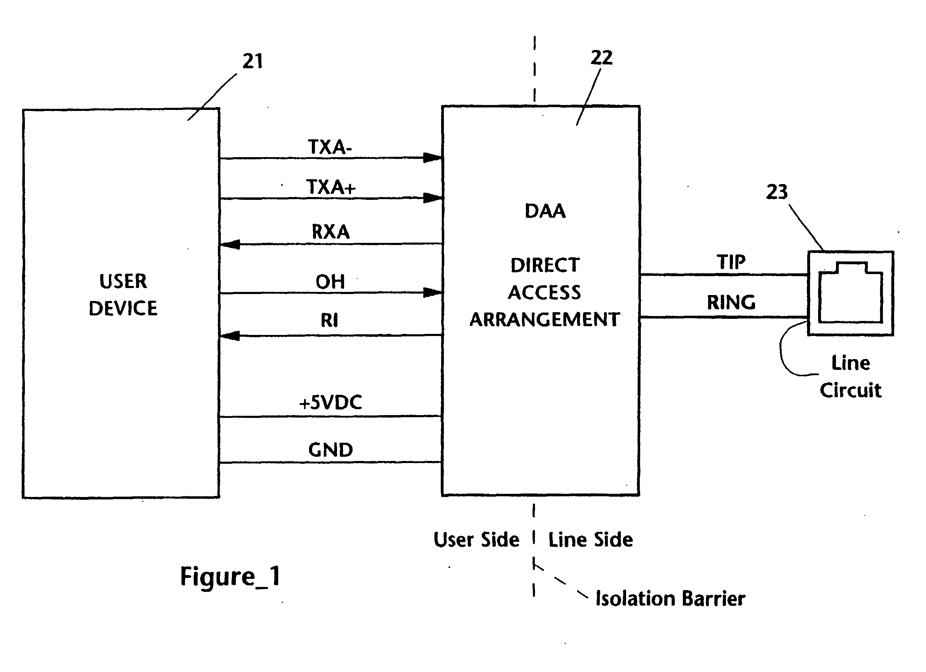

The present invention provides a telephone isolation circuit 22, shown in Figure 1, that is used to connect a user device 21 to a telephone line circuit 23, symbolized as a RJ-11 connector. The telephone isolation circuit 22 is referred to as a Direct Access Arrangement (alternatively, Data Access Arrangement), or DAA, and is devoid of coupling transformers, optical isolator elements, and high value resistors, while providing optimal communication paths and isolation between the user device 21 and the line circuit 23.

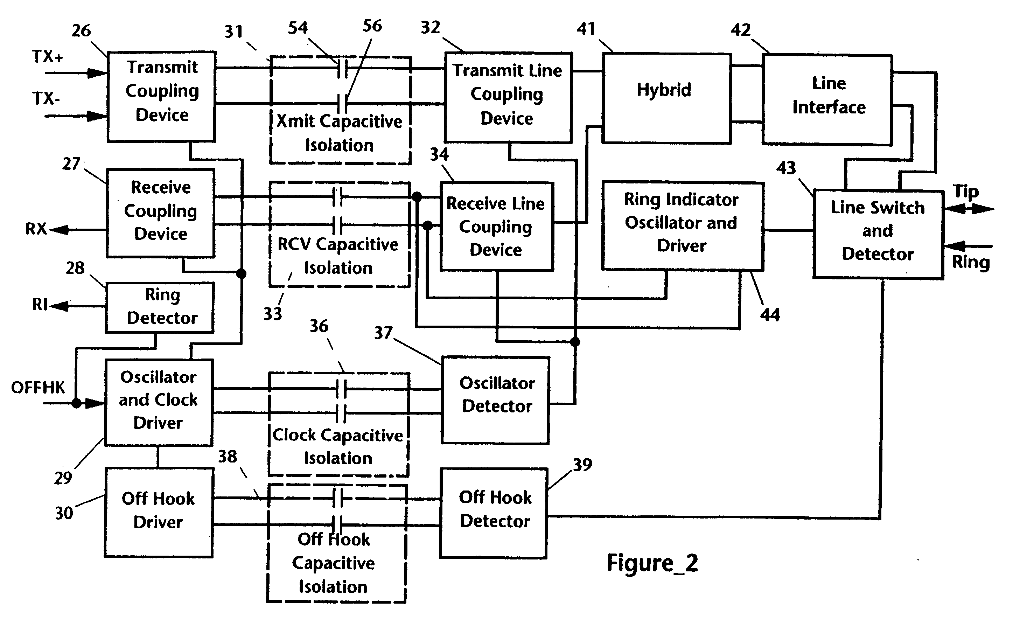

With regard to Figure 2, the DAA 22 of the invention generally includes a user side having a transmit coupling device 26 which accepts communication signals from the user device, a receive coupling device 27 which delivers communication signals to the user device, a ring detector 28, an oscillator and clock driver 29, and an off-hook driver 30. A salient feature of the DAA 22 is the use of capacitive coupling to electrically isolate the user device from the line circuit. Thus, a transmit capacitive isolation circuit 31 connects the transmit coupling device 26 to a transmit line coupling device 32, and a receive capacitive isolation device 33 connects the receive coupling device 27 to a receive line coupling device 34. Likewise, a clock capacitive isolation device 36 connects the oscillator and clock driver 29 to an oscillator detector 37, and an off-hook capacitive isolation device connects the off-hook driver 30 to an off-hook detector 39. The isolation devices 31, 33, 36, and 38 transmit their respective signals across the user-line interface to permit standard telephone operations, while providing high level electrical isolation between the user device and telephone line.

The transmit line coupling device 32 and the receive line coupling device 34 are connected to a hybrid circuit 41, which in turn is connected through a line interface circuit 42 and a relay and detector circuit 43 to the telephone line. The oscillator detector 37 is connected to the receive line coupling device and to the transmit circuit 32. The off-hook detector 39 is connected directly to the line switch and detector circuit 43. A ring indicator oscillator and driver 44 is connected between the receive capacitive isolation device 33 and the line switch and detector circuit 43. Generally speaking, the devices and circuits 32, 34, 37, 39, and 41-44 are considered to be on the telephone line side of the DAA 22.

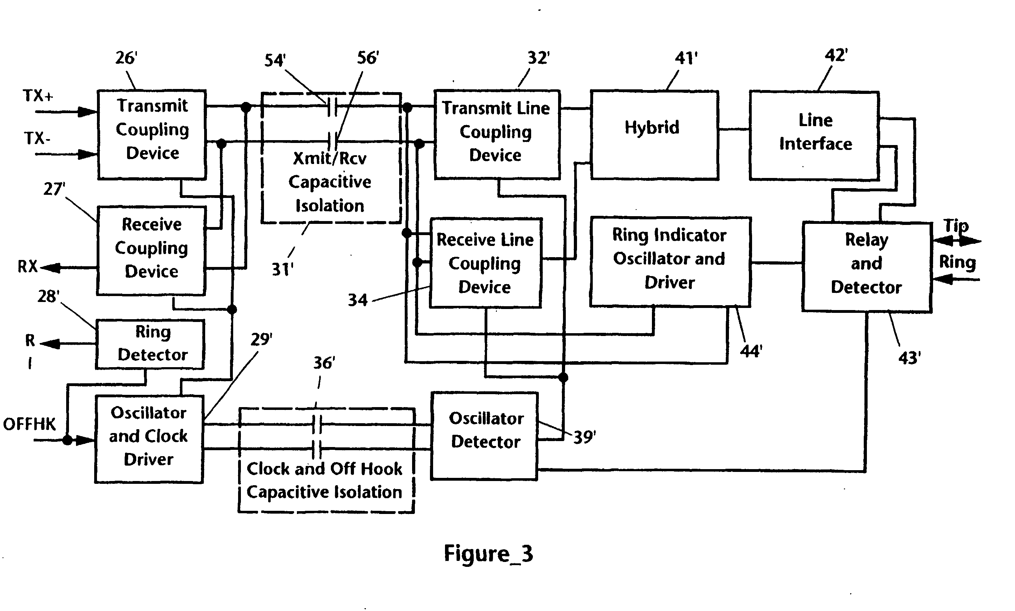

The circuit configuration may be simplified, as shown in Figure 3, in which similar components are labeled with the same reference numeral and a prime (') designation. In the embodiment of Figure 3, the clock driver circuit and off-hook driver device are connected through the same clock capacitive isolation device 36', and the transmit and receive functions are conducted through a single capacitive isolation device 31' using a time division multiplexing technique. This simplification permits the elimination of components 30, 33, 38, and 39, with the accompanying savings in parts and labor cost.

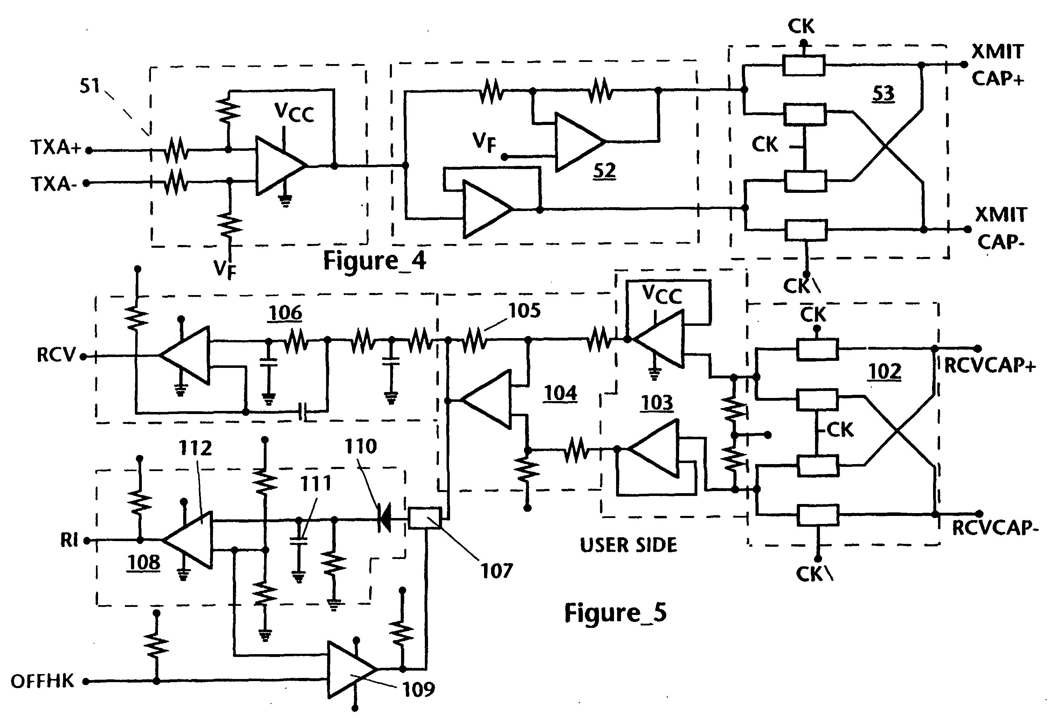

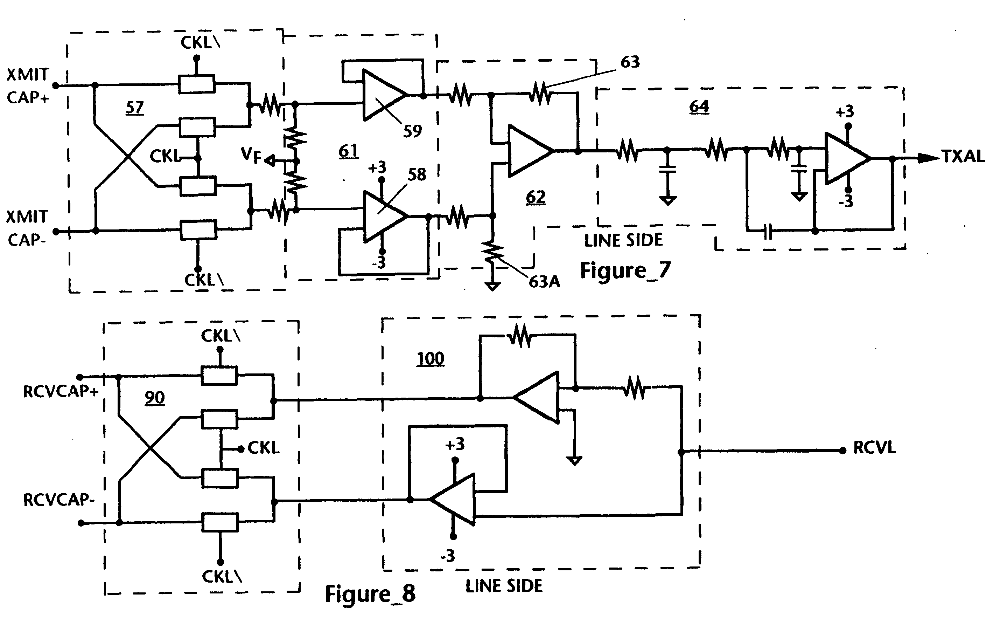

With regard to Figure 4, the transmit coupling device 26 includes an input buffer circuit 51. The TXA+ and TXA- signals are received differentially by the buffer 51 from the user device, and the buffer 51 translates the incoming signals into a single ended signal to be used by the differential translator signal driver 52. (The TXA- signal may be grounded for a single ended input device without affecting the operation of the circuitry as described herein.) The differential signal from driver 52 is fed to a transmit switch network 53, which charges the capacitors 54 and *56* of the transmit capacitive isolation device 31, as explained below. On the line side of the isolation interface, the transmit line coupling device 32 includes a transmitter signal recovery switch network 57, as shown in Figure 7. The network 57 is composed of a quad switch circuit configured similarly to the capacitor input network 53 on the user side, and synchronized therewith by a common clock signal. The two networks 53 and 57 operate cooperatively to switch an information signal across the interface barrier in a reiterative process. The following explanation pertains not only to networks 53 and 57, but to all the differential network circuits described herein for transmitting signals across the isolation barrier.

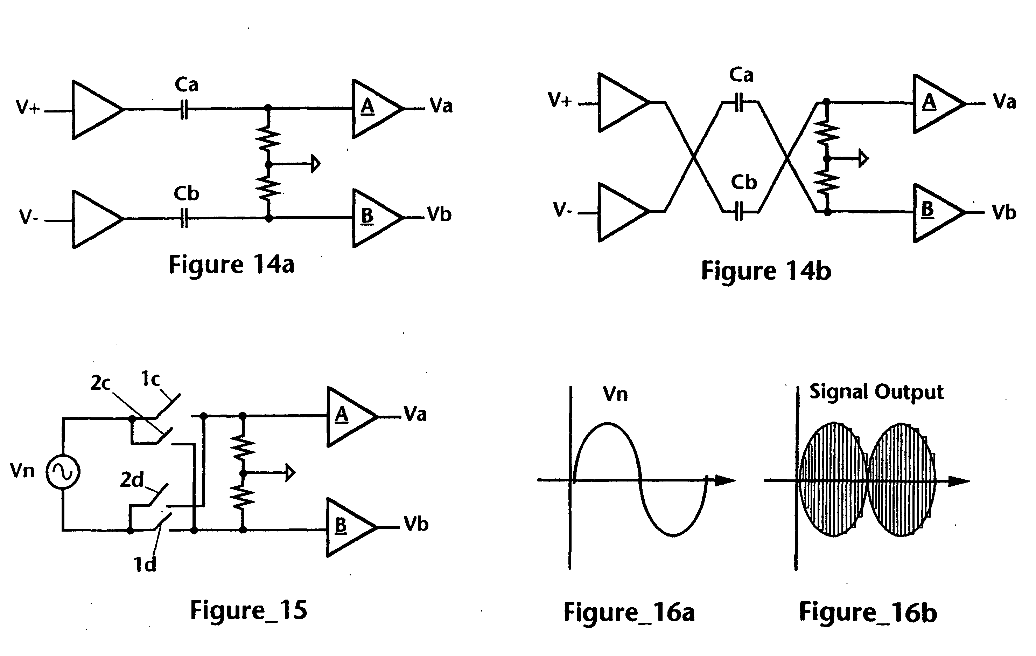

With regard to Figure 14, the two differential switching networks can assume two different configurations, depending upon whether the clock signal is high or low. When the clock signal is high, as shown in Figure 14a, the positive differential signal V+ is conducted to capacitor Ca, charging Ca and causing the signal to be conducted directly to op amp A, resulting in signal Va. Likewise, differential signal V- passes through capacitor Cb to op amp B, resulting in signal Vb. When the clock signal shifts low, the quad switches flip on both sides of the capacitors, resulting in the circuit arrangement of Figure 14b. Signal V+ charges capacitor Cb, and signal V- charges capacitor Ca. The signal from Cb goes to op amp A, and the signal from capacitor CA goes to op amp B. Thus, although the charges on capacitors Ca and Cb have been reversed, the signal V+ is conducted to op amp A and the signal V- is conducted to op amp B, so that Va remains a function of V+, and Vb remains a function of V-. This process reiterates in synchronism with the clock signal, transmitting the signals across the isolation barrier.

Using this technique of switching the capacitor polarity in an opposite way the telephone voice band signal frequencies are able to pass through a small value capacitor and still transfer 80% of the signal value at Va and Vb.

This signal transmission technique significantly reduces common mode noise. The equivalent circuit for common mode noise, Vn, is depicted in Figure 15, Assuming that the capacitor ratio ^{Ca}/_{Cb} is less than the resistance ratio of the voltage divider, then in the high clock state, Va = +¹/₂ Vn and Vb = -¹/₂ Vn, and in the low clock state Va=-¹/₂ Vn and Vb = + ¹/₂ Vn. Given a Vn signal input as depicted in Figure 16a, the corresponding signal output is depicted in Figure 16b. The common mode noise has been shifted from the voice band into the clock frequency by the signal transmission technique and eliminated by a low pass filter having an upper corner cutoff of 10 KHZ to 15 Khz.

Returning to Figure 7, the two op amps 58 and 59 serve as a buffer 61 to recover the differential signals and restore them to a proper level. The buffered differential signals are fed to an op amp converter circuit 62 that restores the differential signals to a single-ended signal. The value of resistors 63 and 63A may be selectively varied to alter the gain of the transmit path, in accordance with the requirements of various modem integrated circuits. The single-ended signal is fed through an anti-alias low pass filter 64 which has an upper corner frequency of 15KHz to remove the residual effects and noise generated by the switching network 57, as well as common mode noise. The resulting output is the TXAL signal, a smooth, filtered, gain-controlled analog signal equivalent to the user generated information signal.

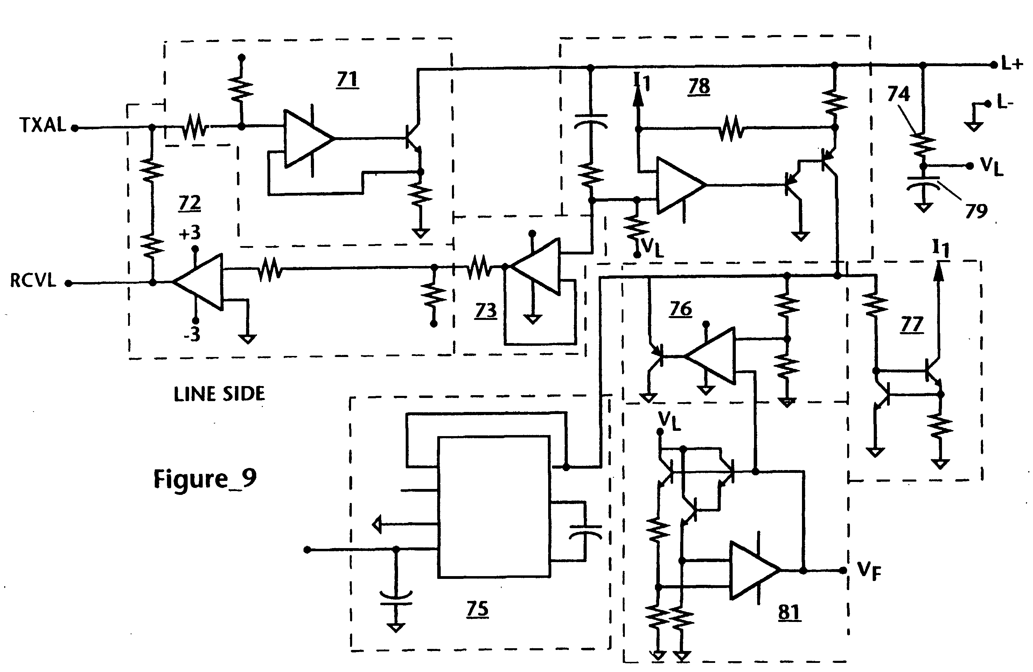

With regard to Figure 9, the TXAL signal is connected to drive a low distortion transmitter signal current driver 71, which in turn is fed to the hybrid circuit 41 or 41' of Figures 2 and 3. The hybrid circuit consists of an op amp connected to function as a receive path amplifier 73 that produces a voltage equal to the superposition of the outgoing and incoming currents on the line side, and a return signal cancellation circuit 72 that removes a selected proportion of the outgoing signal. For voice communication, a small amount of the outgoing signal is permitted to pass through the receive channel, creating a side tone effect. The speaker thus hears a small portion of his/her own voice, giving presence to the connection. For modem applications and the like, circuit 72 provides almost complete elimination of the outgoing signal to the user device. The degree of side tone removal is determined by the accuracy of the impedance match between the telephone line and resistor 74.

Resistor 74 and capacitor 79 are connected in series between L+ and L-(common), and the output V_{L} to power super stable voltage reference 81. Resistor 74 generates a voltage proportional to the current flowing in the line, and capacitor 79 bypasses the AC signal on the line. Circuit 76 comprises a positive voltage regulator producing a voltage V₁ (+3V), which also provides a stable driving voltage for a current reference generator 77, which produces a current I₁. The stable current I₁ is fed to a DC resistance control circuit 78, which sets the DC resistance slope for the DAA in accordance with the regulations formulated in the EIA/TIA and Bell specifications. Circuit 75 produces a steady -3VDC from the V₁ input to power many of the op amp circuits on the line side described herein. This unique control circuitry provides AC termination, allow drawing current for the line side apparatus without interfering with the proper DC termination, provides a low distortion transmit signal generation mechanism, and converts the current from the line into a dual voltage supply.

The circuit 72 also produces the receive line signal RCVL, which is fed through a differential signal processor 100 (Figure 8), to convert the single-ended RCVL signal to complementary differential signals. These signals are fed to a clocked switch network 90 which is driven by the complementary clock signals CKL and CKL\ to differentially charge the isolation capacitors of circuit 33. The operation of this network are described with reference to Figure 14 in the preceding description.

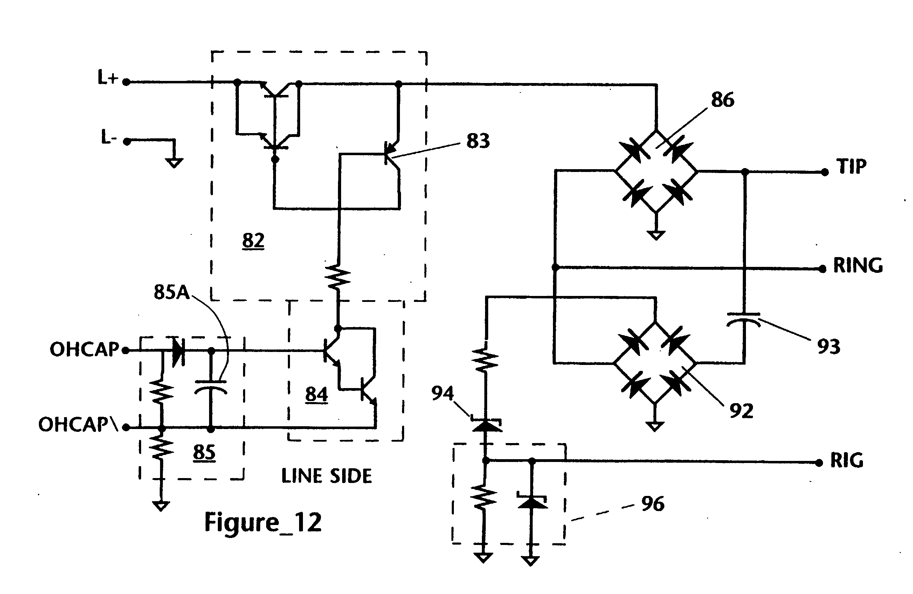

With regard to Figure 12, the line interface 42 and the line switch and detector circuit 43 (of Figure 3) includes a solid state off-hook line switch 82 comprised. of a pair of parallel transistors to open and close the current path from the telephone line to the L+ output. An off-hook switch driver 84 is controlled by an off-hook clock receiver and charge pump circuit 85, which is connected to the line sides of off-hook isolation capacitors in device 36 of Figure 2. A secondary transistor 83 is used in conjunction with the off-hook switch driver 84 to insure only leakage current flows until the energy across capacitor 85A is sufficient to forward bias the darlington pair of the off-hook switch driver 84. A bridge rectifier 86, connected between the TIP connection and the off-hook line switch, is formed of Schottky diodes or the like, to regulate plus and minus polarity from the TIP signal.

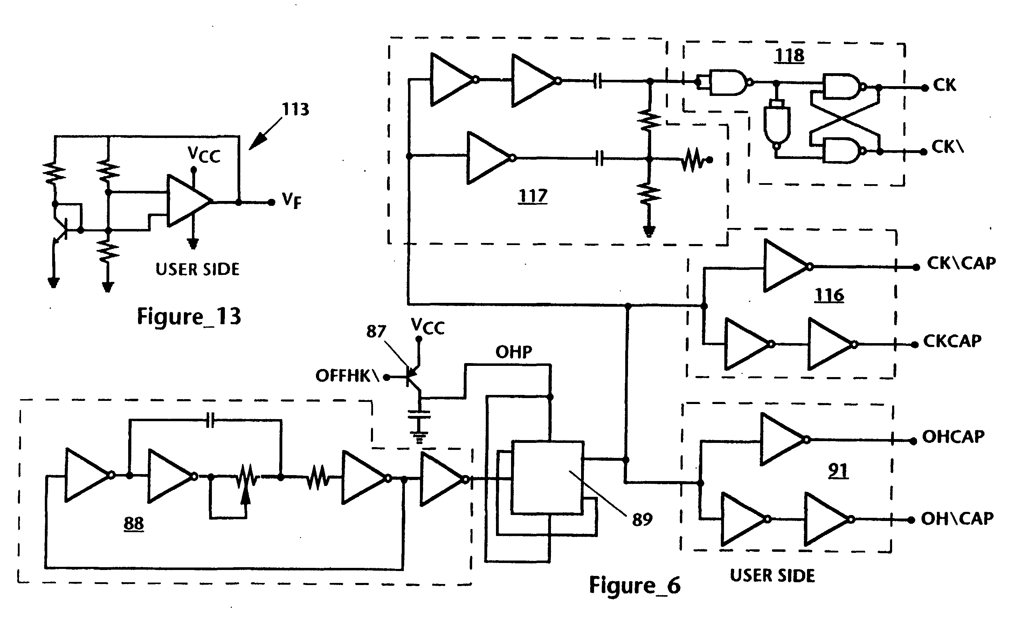

With regard to Figure 6, when the user device signals the DAA to go off-hook by placing the OFFHK\ line in a low state, transistor 87 is forward biased and turns conductive. Square wave generator 88 operates continuously to produce a constant frequency (e.g., 600 KHz), which is fed to divide-by-two counter 89 to achieve a 50% duty signal. Activation of transistor 87 permits the counter 89 to operate, passing the square wave (at 300 KHz) to a differential off-hook clock driver 91. The clock driver 91 supplies the signals OHCAP and OH\CAP to the user sides of the capacitors in circuit 38 (Figure 2).

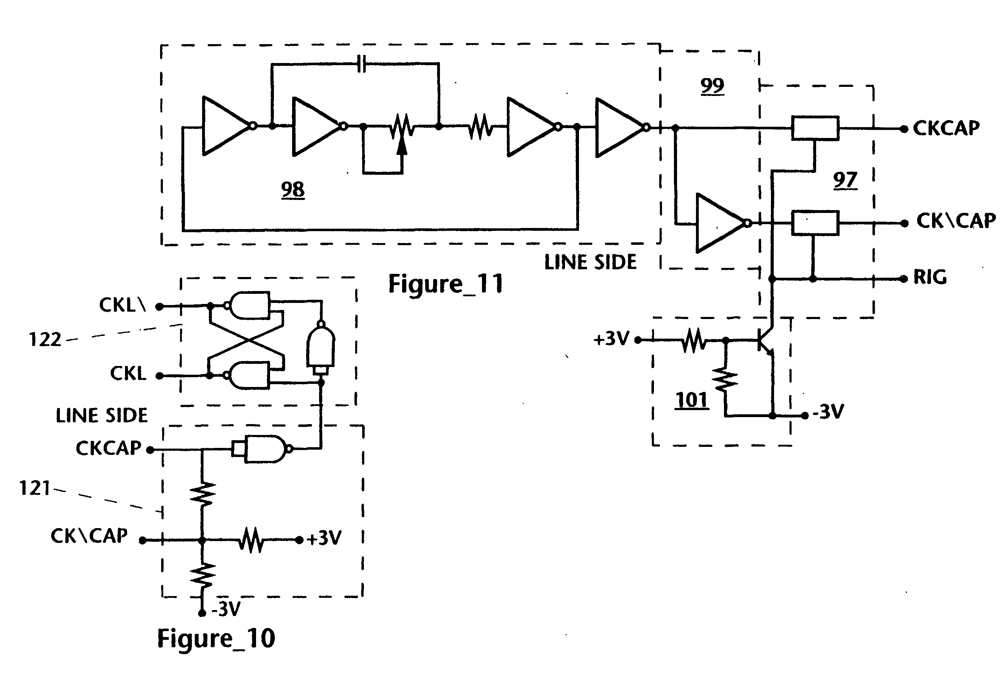

Returning to Figure 12, bridge rectifier 92 is connected to ring signal AC coupling capacitor 93 to develop a DC level greater than the threshold of zener diode 94. When ring signals from the telephone line reach peaks above approximately 30 volts peak they raise the DC level across the parallel resistor-zener network 96. This voltage attains a level no greater than approximately 5.1 volts, and comprises the RIG signal that is used to power the switching network 97 and ring oscillator of Figure 11. Switching network 97 passes the ring oscillator signal to the line side of the receive isolation capacitors of device 33 (Figure 2). Ring oscillator 98 (Figure 11) is set to operate at approximately 300 KHz, and feeds the differential driver circuit 99. A lockout circuit 101 prevents the ring signal information from being generated unless the DAA is on-hook. When the DAA is off-hook the transistor of circuit 101 is turned on, preventing the RIG signal from actuating the switches of circuit 97.

On the user side of device 33, differential switched network 102 (Figure 5) receives signals from the isolation capacitors of device 33 and is synchronized with them by the clock signals described previously. The received signal is recovered in differential analog form and fed to an input signal buffer 103. The buffered signal is fed to a converter circuit 104 which transforms the differential analog signal to a single-ended signal. The output of the op amp in circuit 104 sets the gain of the receive side. The value of resistor 105 can be adjusted to adapt to different modem chips.

The signal output of the differential to single ended converter 104 provides input for two different applications. One is the receiver section that is active when the DAA is off-hook. The signal from converter 104 is fed to an anti-alias low pass filter circuit 106. The filter corner frequency is approximately 15 KHz to remove the switch noise and high frequency RF noise on the telephone line. The op amp of filter circuit 106 provides a buffered output signal RCV at the user interface point connection. The RCV signal comprises the analog received signal for all user devices connected to the interface. The output of buffer circuit 104 is also fed through switch 107 to a ring indicator circuit 108. The received analog signal is representative of the ringing signal. If the DAA is on-hook and the OFFHK\ signal is absent, op amp 109 will turn on switch 107 and feed the received analog signal to a ring indicator circuit 108. The signal is rectified by diode 110 and used to charge capacitor 111. The capacitor charge is compared by op amp 112 to a fixed voltage reference, and a ring signal output RI\ is generated when the charge exceeds the reference. The output RI\ is provided to an output connection point of the user interface.

One circuit necessary for the functioning of various portions of the user side of the DAA is a reference voltage generator 113, depicted in Figure 13. The circuit 113 operates on the standard V_{CC} provided on the user side, and generates a 2.5 VDC stable output for the op amps on the user side. Returning to Figure 6, the 300 KHz square wave output of the counter 89 is also fed to a differential clock driver circuit 116, which generates the signals CK\CAP and CKCAP used to transfer energy across the isolation capacitors. The output of counter 89 is also fed to a phase delay circuit 117, which is designed to match the delays of the external isolation capacitor elements of circuits 31, 33, 36, and 38. The phase delay circuit 117 generates a correctly timed clock signal for the two phase clock circuit 118, which in turn supplies the clock signal pair CK and CK\ to all the user side coupling devices.

Another circuit necessary for various portions of the line side of the DAA is the clock system depicted in Figure 10. Clock signals transmitted through the capacitors of circuit 36 are received by a buffer circuit 121, and processed by a squaring circuit 122. The output of circuit 122 is the clock signals CKL\ and CKL which are used to drive the switching networks of Figure 7 on the telephone line side. Thus the clock signals originating on the user side are transmitted across the interface to synchronize the signal decoding on the line side.

The circuits described herein may be formed of devices that are discrete components, or may be part of an integrated circuit formed using conventional ASIC techniques.

The foregoing description of the preferred embodiment of the invention has been presented for purposes of illustration and description. It is not intended to be exhaustive or to limit the invention to the precise form disclosed.

The embodiment described is selected to best explain the principles of the invention and its practical application to thereby enable others skilled in the art to best utilize the invention in various embodiments and with various modifications as suited to the particular purpose contemplated. It is intended that the scope of the invention be defined by the claims appended hereto.

## Claims

1. A telephone line isolation circuit (22) for connecting a user device (21) to a telephone communication line pair for full duplex communication on the line pair while providing an electrical isolation barrier between the user side and the line side of the isolation circuit (22), wherein:
the electrical isolation barrier is provided by capacitive coupling **characterised in that** an information signal transmittable across the electrical isolation barrier includes a transmit signal and a receive signal, the transmit signal and the receive signal being provided through the same capacitive isolation device (31'); and
a clock signal originating on the user side of the isolation circuit (22), the clock signal being transmittable to the line side of the isolation circuit to synchronise signal processing of the transmit signal and the receive signal on the line side.

2. A telephone line isolation circuit (22) according to claim 1, including:
a pair of capacitors (54,56) connected across said electrical isolation barrier, each of said capacitors having like first ends connected to one side of said isolation circuit and like second ends connected to the other side of said isolation circuit; and
means for transmitting the information signal across said capacitors from said one side to said other side.

3. A telephone line isolation circuit (22) according to claim 1 wherein information signals transmittable across the electrical isolation barrier include the clock signal, an off-hook signal and a ringing signal.

4. A telephone line isolation circuit (22) according to claim 1 wherein the transmit signal and the receive signal are provided through the same capacitive isolation device (31') using time division multiplexing.

5. A telephone line isolation circuit (22) according to claim 2 wherein the means for transmitting an information signal across said capacitors from said one side to said other side includes means for differentially charging said like first ends of said pair of capacitors with said information signal, means (57) for receiving said differential charge on said like second ends of said pair of capacitors, and means (61,62) for converting said differential charge on said second ends to a restored information signal.

6. A telephone line isolation circuit according to claim 5 wherein a clock capacitive isolation device (36) connects an oscillator and clock driver (29) to an oscillator detector (37), and an off-hook capacitive isolation device (38) connects an off-hook driver (30) to an off-hook detector (39).

7. A telephone line isolation circuit (22) according to claim 5, wherein said means for differentially charging includes differential translator circuit means (52) for receiving said information signal and generating paired complementary differential signals corresponding to said information signal.

8. A telephone line isolation circuit according to claim 7, wherein said means for differentially charging includes switched transmit network means (53) for incrementally and alternately switching said paired complementary differential signals to said first ends of said pair of capacitors.

9. A telephone line isolation circuit (22) according to claim 8, further including first clock signal means (29) for generating the clock signal to drive said switched transmit network means (53) to operate reiteratively and cyclically.

10. A telephone line isolation circuit (22) according to claim 9, wherein said means (52) for receiving said differential charge includes switched receive network means for incrementally and alternately switching charge levels from said second ends of said capacitors to form paired complementary received differential signals.

11. A telephone line isolation circuit (22) according to claim 10, wherein said means (52) for receiving said differential charge includes differential decoder circuit means for receiving said paired complementary received differential signals and generating a corresponding received information signal.

12. A telephone line isolation circuit according to claim 10, further including second clock signal means for generating a clock signal to drive said switched receive network means to operate reiteratively and cyclically.

13. A telephone line isolation circuit according to claim 12, further including means for synchronizing said first and second clock signal means.

14. A telephone line isolation circuit according to claim 13, wherein said means for synchronizing includes means for transmitting clock signals across said isolation barrier to link said first and second clock signal means.

15. A telephone line isolation circuit according to claim 14, wherein said means for transmitting clock signals includes a second pair of capacitors connected across said electrical isolation barrier, each of said second capacitors having like first ends connected to said one side of said isolation circuit and like second ends connected to the other side of said isolation circuit.

16. A telephone line isolation circuit according to claim 15, further including phase shifting means connected between said first and second clock signal means to compensate for phase shift caused by said second pair of capacitors.

17. A telephone line isolation circuit according to claim 11, further including voltage recovery means for receiving current provided by said line pair and generating an operating voltage for driving circuitry on said line side of said isolation barrier.

18. A telephone line isolation circuit according to claim 17, wherein said voltage recovery means includes circuit means connected to said current provided by said line pair and having high AC impedance and adjustable DC resistance.

19. A telephone line isolation circuit according to claim 17, further including stable voltage reference means for receiving said operating voltage and generating a highly stable voltage reference for circuitry on said line side of said isolation barrier.

20. A telephone line isolation circuit according to claim 5, further including another pair of capacitors connected across said electrical isolation barrier, and means for transmitting an off-hook signal from said user side to said line side of said isolation barrier.

21. A telephone line isolation circuit according to claim 20, further including means for transmitting a ringing signal across said another pair of capacitors from said line side to said user side of said isolation barrier.

22. A telephone line isolation circuit according to claim 1, including:
a pair of capacitors (54,58) connected across said electrical isolation barrier; and
switching means (53) for synchronously switching an information signal alternately to each of said pair of capacitors to differentially charge said capacitors and transmit said information signal across said isolation barrier, whereby common mode noise is eliminated by said switching means.

23. A method for transmitting an information signal
across an electrical isolation barrier between a telephone communication line pair and a user device (21), including the step of providing the electrical isolation barrier by capacitive coupling **characterised by** the steps of:
transmitting a transmit signal and a receive signal across the electrical isolation barrier the transmit signal and the receive signal being provided through the same capacitive isolation device (31');
generating a clock signal originating on the user side of the isolation circuit (22); and
transmitting the clock signal to the line side of the isolation circuit to synchronise signal processing of the transmit signal and the receive signal on the line side of the isolation circuit.

24. A method according to claim 23 including the step of transmitting the information signal across a pair of capacitors (54, 56) connected across the electrical isolation barrier.

25. A method according to claim 24 wherein an information signal is transmitted between an oscillator and clock driver (29) to an oscillator detector (37) by a clock capacitive isolation device (36), and an information signal is transmitted between an off-hook driver (30) and an off-hook detector (39) by an off-hook capacitive isolation device (38).

26. A method according to claim 23, including the steps of:
connecting a pair of capacitors (54,56) across said isolation barrier;
differentially charging said pair of capacitors with said information signal on one side of said isolation barrier;
detecting the differential charge on said pair of capacitors on the other side of said isolation barrier; and
converting the detected differential charge on said pair of capacitors into a received signal corresponding to said information signal.

27. A method according to claim 26, further including the step of converting said information signal to paired complementary differential signals to charge said capacitors.

28. A method according to claim 27, further including the step of incrementally and reversibly charging said pair of capacitors in reiterative fashion in synchronism with the constant clock signal.

## Patentansprüche

1. Telefonleitungs-lsolierungsschaltung (22) zum Verbinden einer Teilnehmervorrichtung (21) mit einem Telefonkommunikationsleitungspaar zur Voll-Duplex-Datenübermittlung über das Leitungspaar, während zwischen der Teilnehmerseite und der Leitungsseite der Isolierungsschaltung (22) eine elektrisch isolierende Sperre vorgesehen ist, worin:
die elektrisch isolierende Sperre durch kapazitive Kopplung bereitgestellt ist, **dadurch gekennzeichnet, dass** ein Informationssignal, das über die elektrisch isolierende Sperre übermittelbar ist, ein Sendesignal und ein Empfangssignal umfasst, wobei das Sendesignal und das Empfangssignal durch die selbe kapazitive Isolierungsvorrichtung (31') bereitgestellt werden; und
ein Taktsignal auf der Teilnehmerseite der Isolierungsschaltung (22) erzeugt wird, wobei das Taktsignal zur Leitungsseite der Isolierungsschaltung übermittelbar ist, um die Signalverarbeitung des Sendesignals und des Empfangssignals auf der Leitungsseite zu synchronisieren.

2. Telefonleitungs-lsolierungsschaltung (22) nach Anspruch 1, umfassend:
ein Paar Kondensatoren (54, 56), die über die elektrisch isolierende Sperre verbunden sind, wobei jeder der Kondensatoren gleichartige erste Enden, die an eine Seite der Isolierungsschaltung angeschlossen sind, und gleichartige zweite Enden aufweist, die an die andere Seite der Isolierungsschaltung angeschlossen sind; und
Mittel zum Übertragen des Informationssignals über die Kondensatoren von der einen Seite zur anderen Seite.

3. Telefonleitungs-Isolierungsschaltung (22) nach Anspruch 1, worin Informationssignale, die über die elektrisch isolierende Sperre übermittelbar sind, das Taktsignal, ein off-hook-Signal und ein Klingelsignal umfassen.

4. Telefonleitungs-lsolierungsschaltung (22) nach Anspruch 1, worin das Sendesignal und das Empfangssignal unter Einsatz von Zeitmultiplextechnik durch die selbe kapazitive Isolierungsvorrichtung (31') bereitgestellt werden.

5. Telefonleitungs-Isolierungsschaltung (22) nach Anspruch 2, worin das Mittel zum Übertragen eines Informationssignals über die Kondensatoren von der einen Seite zur anderen Seite Mittel zum differenzierten Laden der gleichartigen ersten Enden des Kondensator-Paares mit dem Informationssignal, Mittel (57) zum Empfangen der Differenzladung an den gleichartigen zweiten Enden des Kondensator-Paares sowie Mittel (61, 62) umfasst, um die Differenzladung an den zweiten Enden in ein wiederhergestelltes Informationssignal umzuwandeln.

6. Telefonleitungs-lsolierungsschaltung nach Anspruch 5, worin eine kapazitive Takt-Isolierungsvorrichtung (36) einen Oszillator und einen Takttreiber (29) mit einem Oszillatordetektor (37) verbindet und eine kapazitive Isolierungsvorrichtung (38) für den off-hook-Zustand einen off-hook-Treiber (30) mit einem off-hook-Detektor (39) verbindet.

7. Telefonleitungs-Isolierungsschaltung (22) nach Anspruch 5, worin das Mittel zum differenzierten Laden Differentialumsetzer-Schaltmittel (52) umfasst, um das Informationssignal zu empfangen und gepaarte komplementäre Differenzsignale zu erzeugen, die dem Informationssignal entsprechen.

8. Telefonleitungs-Isolierungsschaltung nach Anspruch 7, worin das Mittel zum differenzierten Laden geschaltete Sendenetzmittel (53) umfasst, um die gepaarten komplementären Differenzsignale inkrementierend und alternierend zu den ersten Enden des Kondensator-Paares zu schalten.

9. Telefonleitungs-Isolierungsschaltung (22) nach Anspruch 8, weiters umfassend ein erstes Taktsignalmittel (29) zur Erzeugung des Taktsignals, um das geschaltete Sendenetzmittel (53) so zu betreiben, dass es reiterativ und zyklisch arbeitet.

10. Telefonleitungs-Isolierungsschaltung (22) nach Anspruch 9, worin das Mittel (52) zum Empfangen der Differenzladung geschaltete Empfangsnetzmittel umfasst, um Ladungsniveaus von den zweiten Enden der Kondensatoren inkrementierend und alternierend zu schalten, um gepaarte komplementäre empfangene Differenzsignale zu bilden.

11. Telefonleitungs-lsolierungsschaltung (22) nach Anspruch 10, worin das Mittel (52) zum Empfangen der Differenzladung Differenz-Decoderschaltungsmittel umfasst, um die gepaarten komplementären empfangenen Differenzsignale zu empfangen und ein entsprechendes empfangenes Informationssignal zu erzeugen.

12. Telefonleitungs-Isolierungsschaltung nach Anspruch 10, die weiters zweite Taktsignalmittel umfasst, um ein Taktsignal zu erzeugen, um das geschaltete Empfangsnetzmittel so zu betreiben, dass es reiterativ und zyklisch arbeitet.

13. Telefonleitungs-Isolierungsschaltung nach Anspruch 12, die weiters Mittel zum Synchronisieren des ersten und des zweiten Taktsignalmittels umfasst.

14. Telefonleitungs-lsolierungsschaltung nach Anspruch 13, worin das Mittel zum Synchronisieren Mittel umfasst, um Taktsignale über die isolierende Sperre zu senden, um das erste und das zweite Taktsignalmittel zu verknüpfen.

15. Telefonleitungs-lsolierungsschaltung nach Anspruch 14, worin das Mittel zum Senden von Taktsignalen ein zweites Paar Kondensatoren umfasst, die über die elektrisch isolierende Sperre verbunden sind, wobei jeder der zweiten Kondensatoren gleichartige erste Enden, die an die eine Seite der Isolierungsschaltung angeschlossen sind, und gleichartige zweite Enden aufweist, die an die andere Seite der Isolierungsschaltung angeschlossen sind.

16. Telefonleitungs-lsolierungsschaltung nach Anspruch 15, die weiters Phasenverschiebungsmittel umfasst, die zwischen dem ersten und dem zweiten Taktsignalmittel zwischengeschaltet sind, um Phasenverschiebung auszugleichen, die vom zweiten Kondensator-Paar verursacht wird.

17. Telefonleitungs-Isolierungsschaltung nach Anspruch 11, die weiters Spannungswiederherstellungsmittel umfasst, um Strom aufzunehmen, der vom Leitungspaar bereitgestellt wird, und eine Betriebsspannung zu erzeugen, um den Schaltungskomplex auf der Leitungsseite der isolierenden Sperre zu betreiben.

18. Telefonleitungs-Isolierungsschaltung nach Anspruch 17, worin das Spannungswiederherstellungsmittel Schaltungsmittel umfasst, die an den Strom angeschlossen sind, der vom Leitungspaar bereitgestellt wird, und eine hohe Wechselstrom-Impedanz und einen einstellbaren Gleichstrom-Widerstand aufweisen.

19. Telefonleitungs-lsolierungsmittel nach Anspruch 17, das weiters Mittel für eine stabile Bezugsspannung umfasst, um die Betriebsspannung aufzunehmen und eine hochstabile Bezugsspannung für den Schaltungskomplex auf der Leitungsseite der isolierenden Sperre zu erzeugen.

20. Telefonleitungs-Isolierungsschaltung nach Anspruch 5, die weiters ein weiteres Paar Kondensatoren, die über die elektrisch isolierende Sperre verbunden sind, sowie Mittel umfasst, um ein off-hook-Signal von der Teilnehmerseite zur Leitungsseite der isolierenden Sperre zu senden.

21. Telefonleitungs-Isolierungsschaltung nach Anspruch 20, die weiters Mittel umfasst, um ein Klingelsignal über das andere Paar Kondensatoren von der Leitungsseite zur Teilnehmerseite der isolierenden Sperre zu senden.

22. Telefonleitungs-Isolierungsschaltung nach Anspruch 1, umfassend:
ein Paar Kondensatoren (58, 58), die über die elektrisch isolierende Sperre verbunden sind; und
Umschaltmittel (53), um ein Informationssignal synchron abwechselnd zu jedem des Paares von Kondensatoren zu schalten, um die Kondensatoren differenziert zu laden und das Informationssignal über die isolierende Sperre zu übertragen, wodurch das Umschaltmittel Gleichtakt-Rauschen beseitigt.

23. Verfahren zum Senden eines Informationssignals über eine elektrisch isolierende Sperre zwischen einem Telefonkommunikationsleitungspaar und einer Teilnehmervorrichtung (21), umfassend den Schritt des Bereitstellens einer elektrisch isolierenden Sperre durch kapazitive Kopplung, durch folgende Schritte **gekennzeichnet**:
das Senden eines Sendesignals und eines Empfangssignals über die elektrisch isolierende Sperre, wobei das Sendesignal und das Empfangssignal durch die selbe kapazitive Isolierungsvorrichtung (31') bereitgestellt werden;
das Erzeugen eines Taktsignals auf der Teilnehmerseite der isolierenden Schaltung (22); und
das Senden des Taktsignals zur Leitungsseite der Isolierungsschaltung, um die Signalverarbeitung des Sendesignals und des Empfangssignals auf der Leitungsseite der Isolierungsschaltung zu synchronisieren.

24. Verfahren nach Anspruch 23, umfassend den Schritt des Sendens des Informationssignals über ein Paar Kondensatoren (54, 56), die über die elektrisch isolierende Sperre verbunden sind.

25. Verfahren nach Anspruch 24, worin ein Informationssignal durch eine kapazitive Takt-Isolierungsvorrichtung (36) zwischen einem Oszillator und einem Takttreiber (29) zu einem Oszillatordetektor (37) übertragen wird und ein Informationssignal durch eine kapazitive off-hook-Isolierungsvorrichtung (38) zwischen einem off-hook-Treiber (30) und einem off-hook-Detektor (39) übertragen wird.

26. Verfahren nach Anspruch 23, folgende Schritte umfassend:
das Verbinden eines Paares Kondensatoren (54, 56) über die isolierende Sperre;
das differenzierte Laden des Kondensator-Paares mit dem Informationssignal auf einer Seite der isolierenden Sperre;
das Detektieren der Differenzladung auf dem Kondensator-Paar auf der anderen Seite der isolierenden Sperre; und
das Umwandeln der detektierten Differenzladung auf dem Kondensator-Paar in ein empfangenes Signal, das dem Informationssignal entspricht.

27. Verfahren nach Anspruch 26, weiters umfassend den Schritt des Umwandelns des Informationssignals in gepaarte komplementäre Differenzsignale zum Laden der Kondensatoren.

28. Verfahren nach Anspruch 27, weiters umfassend den Schritt des inkrementierenden und reversiblen Ladens des Paares Kondensatoren auf reiterative Weise synchron mit dem konstanten Taktsignal.

## Revendications

1. Un circuit d'isolement de ligne téléphonique (22) pour relier un dispositif utilisateur (21) à une paire de lignes de communication téléphonique pour une communication duplex sur la paire de lignes tout en assurant une barrière d'isolement électrique entre le côté utilisateur et le côté ligne du circuit d'isolement (22), dans lequel
la barrière d'isolement électrique est assurée par un couplage capacitif **caractérisé en ce qu'**un signal d'information pouvant être transmis au travers de la barrière d'isolement électrique comprend un signal d'émission et un signal de réception, le signal d'émission et le signal de réception étant fournis à travers le même dispositif d'isolement capacitif (31') ; et
un signal d'horloge prenant son origine sur le côté utilisateur du circuit d'isolement (22), le signal d'horloge pouvant être transmis vers le côté ligne du circuit d'isolement afin de synchroniser le traitement de signaux du signal d'émission et du signal de réception sur le côté ligne.

2. Un circuit d'isolement de ligne téléphonique (22) selon la revendication 1, comprenant :
une paire de condensateurs (54, 56) reliés aux bornes de la barrière d'isolement électrique, chacun desdits condensateurs présentant de premières extrémités analogues reliées à un premier côté dudit circuit d'isolement et de secondes extrémités analogues reliées à l'autre côté dudit circuit d'isolement ; et
des moyens pour transmettre le signal d'information au travers desdits condensateurs depuis ce premier côté jusqu'à cet autre côté.

3. Un circuit d'isolement de ligne téléphonique (22) selon la revendication 1 dans lequel les signaux d'information pouvant être transmis au travers de la barrière d'isolement électrique comprennent le signal d'horloge, un signal de combiné décroché et un signal d'appel.

4. Un circuit d'isolement de ligne téléphonique (22) selon la revendication 1 dans lequel le signal d'émission et le signal de réception sont fournis à travers le même dispositif d'isolement capacitif (31) en utilisant un multiplexage à répartition dans le temps.

5. Un circuit d'isolement de ligne téléphonique (22) selon la revendication 2 dans lequel les moyens pour transmettre un signal d'information au travers desdits condensateurs depuis ce premier côté jusqu'à cet autre côté comprennent des moyens pour charger de manière différentielle lesdites premières extrémités analogues de ladite paire de condensateurs à l'aide dudit signal d'information, des moyens (57) pour recevoir ladite charge différentielle sur lesdites secondes extrémités analogues de ladite paire de condensateurs, et des moyens (61, 62) pour convertir ladite charge différentielle appliquée sur lesdites secondes extrémités en un signal d'information restauré.

6. Un circuit d'isolement de ligne téléphonique selon la revendication 5 dans lequel un dispositif d'isolement capacitif d'horloge (36) relie un oscillateur et un module de commande d'horloge (29) à un oscillateur détecteur (37), et dans lequel un dispositif d'isolement capacitif de combiné décroché (38) relie un module de commande de combiné décroché (30) à un détecteur de combiné décroché (39).

7. Un circuit d'isolement de ligne téléphonique (22) selon la revendication 5, dans lequel lesdits moyens pour charger de manière différentielle comprennent des moyens formant circuit traducteur différentiel (52) pour recevoir ledit signal d'information et produire des signaux différentiels complémentaires appariés correspondant audit signal d'information.

8. Un circuit d'isolement de ligne téléphonique selon la revendication 7, dans lequel lesdits moyens pour charger de manière différentielle comprennent des moyens formant réseau de transmission commutée (53) pour commuter de manière incrémentielle et alternée lesdits signaux différentiels complémentaires appariés vers lesdites premières extrémités de ladite paire de condensateurs.

9. Un circuit d'isolement de ligne téléphonique (22) selon la revendication 8, comprenant en outre de premiers moyens de signal d'horloge (29) pour produire le signal d'horloge afin de commander lesdits moyens formant réseau de transmission commuté (53) en vue d'un fonctionnement réitéré et cyclique.

10. Un circuit d'isolement de ligne téléphonique (22) selon la revendication 9, dans lequel lesdits moyens (52) pour recevoir ladite charge différentielle comprennent des moyens formant réseau de réception commutée pour commuter de manière incrémentielle et alternée des niveaux de charge provenant desdites secondes extrémités desdits condensateurs afin de former des signaux différentiels reçus complémentaires appariés.

11. Un circuit d'isolement de ligne téléphonique (22) selon la revendication 10, dans lequel lesdits moyens (52) pour recevoir ladite charge différentielle comprennent des moyens formant circuit décodeur différentiel pour recevoir lesdits signaux différentiels reçus complémentaires appariés et former un signal d'information reçu correspondant.

12. Un circuit d'isolement de ligne téléphonique selon la revendication 10, comprenant en outre de second moyens de signal d'horloge pour produire un signal d'horloge afin de commander lesdits moyens formant réseau de réception commutée en vue d'un fonctionnement réitéré et cyclique.

13. Un circuit d'isolement de ligne téléphonique selon la revendication 12, comprenant en outre des moyens de synchronisation desdits premier et second moyens de signal d'horloge.

14. Un circuit d'isolement de ligne téléphonique selon la revendication 13, dans lequel lesdits moyens de synchronisation comprennent des moyens prévus pour transmettre des signaux d'horloge au travers de ladite barrière d'isolement afin de relier lesdits premiers et seconds moyens de signal.

15. Un circuit d'isolement de ligne téléphonique selon la revendication 14, dans lequel lesdits moyens prévus pour transmettre des signaux d'horloge comprennent une seconde paire de condensateurs reliée au travers de ladite barrière d'isolement électrique, chacun desdits seconds condensateurs présentant de premières extrémités analogues reliées à ce premier côté dudit circuit d'isolement et de secondes extrémités analogues reliées à cet autre côté dudit circuit d'isolement.

16. Un circuit d'isolement de ligne téléphonique selon la revendication 15, comprenant en outre des moyens de commutation de phase reliés entre lesdits premiers et seconds moyens de signal d'horloge pour compenser un décalage de phase provoqué par ladite seconde paire de condensateurs.

17. Un circuit d'isolement de ligne téléphonique selon la revendication 11, comprenant en outre des moyens de récupération de tension pour recevoir un courant fourni par ladite paire de lignes et former une tension de fonctionnement pour commander un ensemble de circuits sur ledit côté ligne de ladite barrière d'isolement.

18. Un circuit d'isolement de ligne téléphonique selon la revendication 17, dans lequel lesdits moyens de récupération de tension comprennent des moyens de circuit reliés audit courant fourni par ladite paire de lignes et présentant une impédance élevée en courant alternatif et une résistance réglable en courant continu.

19. Un circuit d'isolement de ligne téléphonique selon la revendication 17, comprenant en outre des moyens de référence de tension stable pour recevoir ladite tension de fonctionnement et former une référence de tension extrêmement stable pour l'ensemble de circuits sur le côté ligne de ladite barrière d'isolement.

20. Un circuit d'isolement de ligne téléphonique selon la revendication 5, comprenant en outre une autre paire de condensateurs reliée au travers de ladite barrière d'isolement électrique, ainsi que des moyens pour transmettre un signal de combiné décroché depuis ledit côté utilisateur jusqu'audit côté ligne de ladite barrière d'isolement.

21. Un circuit d'isolement de ligne téléphonique selon la revendication 20, comprenant en outre des moyens pour transmettre un signal d'appel au travers de cette autre paire de condensateurs depuis ledit côté ligne jusqu'au côté utilisateur de ladite barrière d'isolement.

22. Un circuit d'isolement de ligne téléphonique selon la revendication 1, comprenant :
une paire de condensateurs (54, 58) reliée au travers de ladite barrière d'isolement électrique ; et
des moyens de commutation (53) pour commuter de manière synchrone un signal d'information alternativement sur chaque condensateur de ladite paire de condensateurs afin de charger de manière différentielle lesdits condensateurs et transmettre ledit signal d'information au travers de ladite barrière d'isolement, de sorte qu'un bruit de mode commun est éliminé par lesdits moyens de commutation.

23. Un procédé pour transmettre un signal d'information au travers d'une barrière d'isolement électrique entre une paire de lignes de communication téléphonique et un dispositif utilisateur (21), comprenant l'étape consistant à créer la barrière d'isolement électrique à l'aide d'un couplage capacitif **caractérisé par** les étapes consistant à :
transmettre un signal d'émission et un signal de réception au travers de la barrière d'isolement électrique, le signal d'émission et le signal de réception étant fournis à travers le même dispositif d'isolement capacitif (31') ;
produire un signal d'horloge prenant son origine sur le côté utilisateur du circuit d'isolement (22) ; et transmettre le signal d'horloge vers le côté ligne du circuit d'isolement afin de synchroniser le traitement de signal du signal d'émission et du signal de réception sur le côté ligne du circuit d'isolement.

24. Un procédé selon la revendication 23, comprenant l'étape consistant à transmettre le signal d'information au travers d'une paire de condensateurs (54, 56) reliée au travers de la barrière d'isolement électrique.

25. Un procédé selon la revendication 24 dans lequel un signal d'information est transmis entre un oscillateur et un module de commande d'horloge (29) vers un oscillateur détecteur (37) à l'aide d'un dispositif d'isolement capacitif d'horloge (36), et dans lequel un signal d'information est transmis entre un module de commande de combiné décroché (30) et un détecteur de combiné décroché (39) à l'aide d'un dispositif d'isolement capacitif de combiné décroché (38).

26. Un procédé selon la revendication 23, comprenant les étapes consistant à :
relier une paire de condensateurs (54, 56) au travers de ladite barrière d'isolement ;
charger de manière différentielle ladite paire de condensateurs à l'aide dudit signal d'information sur un côté de ladite barrière d'isolement ;
détecter la charge différentielle sur ladite paire de condensateurs sur l'autre côté de ladite barrière d'isolement ; et
convertir la charge différentielle détectée sur ladite paire de condensateurs pour donner un signal reçu correspondant audit signal d'information.

27. Un procédé selon la revendication 26, comprenant en outre l'étape consistant à convertir ledit signal d'information en des signaux différentiels complémentaires appariés afin de charger lesdits condensateurs.

28. Un procédé selon la revendication 27, comprenant en outre l'étape consistant à charger de manière incrémentielle et réversible ladite paire de condensateurs de façon réitérative en synchronisme avec le signal d'horloge constant.
